# EUROPEAN PATENT APPLICATION

(11) **EP 4 092 574 A1**
(43) Date of publication of application: **23.11.2022**
(21) Application number: 22153155.1
(22) Date of filing: 25.01.2022
(51) Int. Cl.: G06K 19/077

(54) **CHIP PACKAGING STRUCTURE, METHOD FOR MAKING THE SAME, AND WIRELESS IDENTIFICATION TAG THEREWITH**

(30) Priority: 21.05.2021 TW 110118405
(71) Applicant: SES RFID Solutions GmbH, 40489 Düsseldorf (DE)
(72) Inventor: LIAW, Shao-Lun, 407 Taichung City (TW); LI, Yu-Cheng, 427 Taichung City (TW)
(74) Representative: Viering, Jentschura & Partner mbB Patent- und Rechtsanwälte

(57) **Abstract**

A chip packaging structure (4000, 4000′, 4000ʺ, 4000‴, 5000, 6000, 7000) includes a miniature antenna (6), an identification chip (7), and a packaging main body (2, 2′, 2ʺ, 2‴, 3, 4, 5). The identification chip (7) is electrically connected to the miniature antenna (6). The packaging main body (2, 2′, 2ʺ, 2‴, 3, 4, 5) is adapted to encapsulate the miniature antenna (6) and the identification chip (7), and has a plurality of corner portions (20) and at least one stress reducing structure (21). The at least one stress reducing structure (21) is provided at at least one of the corner portions (20). In addition, a method of making the chip packaging structure (4000) and a wireless identification tag (1000) having the chip packaging structure (4000, 4000′, 4000ʺ, 4000‴, 5000, 6000, 7000) are also provided.

## Description

### Background of the Disclosure

### 1. Field of the Disclosure

The present invention relates generally to a chip packaging structure, a method for making the chip packaging structure, and a wireless identification tag having the chip packaging structure; more particularly to one that has high durability.

### 2. Description of the Prior Art

In recent years, radio frequency identification technology has been gradually applied in the industry of mobile tires. By planting a radio frequency identification tag into a tire and providing a tag reader at a specific location (e.g., a toll station or an inspection station), the health of the tire can be traced. In this way, one can ensure that every tire in service has not exceeded its expiration date. However, no matter whether a mobile tire is static or moving, there will always be high stress generated inside, damaging the planted radio frequency identification tag. Therefore, how to increase the durability of a radio frequency identification tag is a key issue in the industry.

### Summary of the Disclosure

The present invention provides a chip packaging structure having high durability, a method for making the chip packaging structure, and a wireless identification tag having the chip packaging structure, whereby to solve the problem mentioned above.

Based on an embodiment, the present invention discloses a chip packaging structure, which includes a miniature antenna, an identification chip, and a packaging main body. The identification chip is electrically connected to the miniature antenna. The packaging main body is adapted to encapsulate the miniature antenna and the identification chip, wherein the packaging main body comprises a plurality of corner portions and at least one stress reducing structure. The at least one stress reducing structure is provided at at least one of the corner portions.

Based on an embodiment, the present invention discloses a method for making a chip packaging structure, which includes the steps of: a) performing a stress-reducing structural cutting to a die, whereby to create at least one stress reducing structure; and b) performing a transverse cutting and a vertical cutting to the die that has the at least one stress reducing structure formed thereon, whereby to create at least one chip packaging structure.

Based on an embodiment, the present invention discloses a wireless identification tag, which includes the chip packaging structure mentioned above and a linear antenna. The linear antenna includes a winding portion, a first end portion, and a second end portion, wherein the first end portion is connected to the winding portion, the second end portion is connected to the winding portion, and the winding portion wraps around the packaging main body.

Based on an embodiment, the present invention discloses a chip packaging structure, which includes a miniature antenna, an identification chip, and a packaging main body. The identification chip is electrically connected to the miniature antenna. The packaging main body is adapted to encapsulate the miniature antenna and the identification chip, wherein a contour of the packaging main body is substantially a curve.

Based on an embodiment, the present invention discloses a chip packaging structure, which includes a miniature antenna, an identification chip, and a packaging main body. The identification chip is electrically connected to the miniature antenna. The packaging main body has a packaging main portion, a first end portion, and a second end portion, wherein the first end portion extends at an end of the packaging main portion, and the second end portion extends at another end of the packaging main portion opposite to the first end portion. The first end portion and the second end portion are both curved structures.

In summary, by providing the stress reducing structure at the corner portions of the packaging main body, the present invention could significantly reduce the shear force between the linear antenna and the packaging main body when the internal stress of a tire is exerted thereto. The above and other technical aspects, features, and effects of the present invention will be clearly illustrated in the following detailed descriptions of embodiments with reference to the drawings.

### Brief Description of the Drawings

The present invention will be best understood by referring to the following detailed description of one illustrative embodiment in conjunction with the accompanying drawings, in which
FIG. 1 is a schematic view showing that the wireless identification tag of a first embodiment of the present invention is applied in a tire;
FIG. 2 is a schematic view showing the wireless identification tag of the first embodiment of the present invention and a fixing member;
FIG. 3 is a schematic view of the chip packaging structure of the first embodiment of the present invention;
FIG. 4 is a schematic view of the die of the first embodiment of the present invention;
FIG. 5 is a schematic view showing that the die of the first embodiment of the present invention has gone through the laser cutting of the first phase;
FIG. 6 is a schematic view showing that the die of the first embodiment of the present invention has gone through the laser cutting of the second phase;
FIG. 7 is a schematic view of the chip packaging structure of a second embodiment of the present invention;
FIG. 8 is a schematic view of the chip packaging structure of a third embodiment of the present invention;
FIG. 9 is a schematic view of the chip packaging structure of a fourth embodiment of the present invention;
FIG. 10 is a schematic view of the chip packaging structure of a fifth embodiment of the present invention;
FIG. 11 is a schematic view of the chip packaging structure of a sixth embodiment of the present invention; and
FIG. 12 is a schematic view of the chip packaging structure of a seventh embodiment of the present invention.

### Detailed Description

To facilitate understanding of the present invention for those skilled in the art, multiple embodiments of the present invention will be explained below, along with the drawings which illustrate the composition of the present invention and the intended effect to be achieved in detail. It should be noted that, in order to provide a more straightforward description of the basic structure or method of the implementation of the present invention, the accompanying drawings are simplified schematic views and, therefore, only show components and combinations relevant to the present invention. The actual components, layouts, and arrangements may be more complicated. In addition, for the sake of illustration, the components shown in each of the accompanying drawings of the present invention are not drawn to exact scale with the actual number, shape, and size they are in practical implementations, and their actual scale may be adjusted as required.

The directional terms, such as "up", "down", "left", "right", "front", and "rear", mentioned in the following embodiments simply indicate the directions in the accompanying drawings. Therefore, the directional terms used in the descriptions of the present invention are for illustrative purposes, and are not limitations of the present invention.

Though the wordings "first", "second", "third", etc., can be used to indicate multiple components, the components are not limited by these terms. Such wordings are merely used for distinguishing one component from other components in the specification. Following the sequence of being recited, the language in claims may use different orderings to describe the same components. In other words, a "first some component" mentioned in the following descriptions may be a "second some component" in the claims.

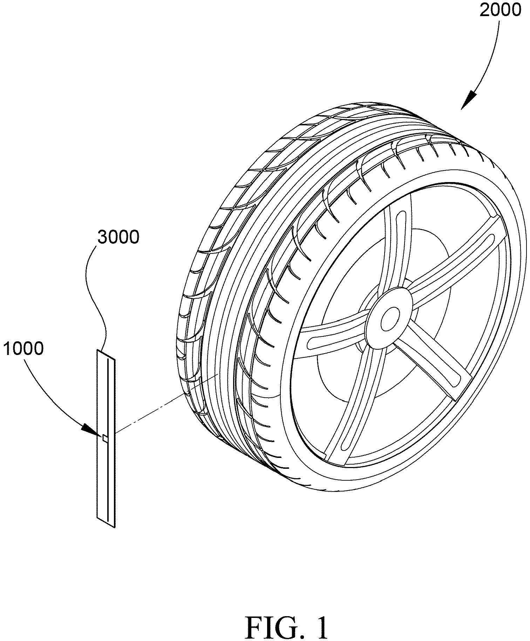

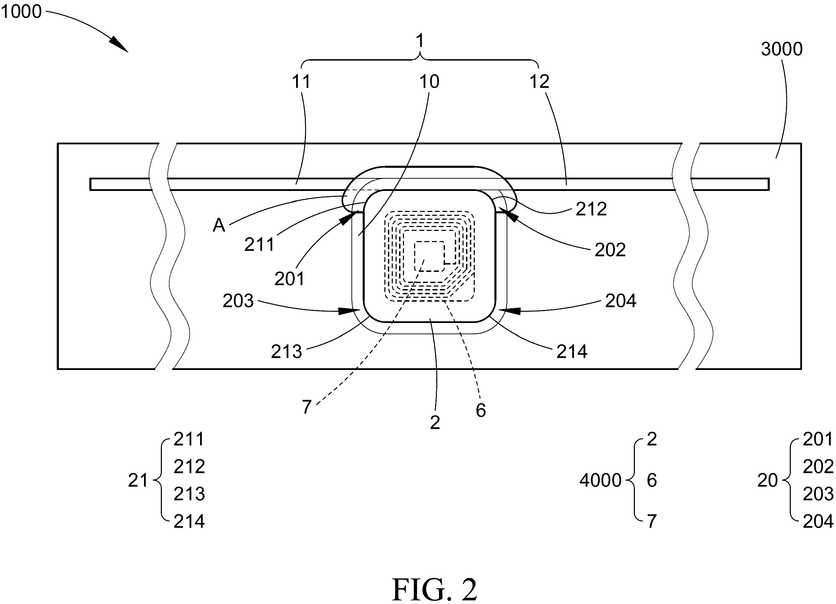

Please refer to FIG. 1 and FIG. 2, wherein FIG. 1 is a schematic view showing that a wireless identification tag 1000 of a first embodiment of the present invention is applied to a tire 2000, and FIG. 2 is a schematic view of the wireless identification tag 1000 of the first embodiment of the present invention and a fixing member 3000. The wireless identification tag 1000 could be an RFID tag (Radio Frequency Identification tag) connected to the tire 2000 through the fixing member 3000, and the fixing member 3000 could be an adhesive tape. After the adhesive tape (i.e., the fixing member 3000) adheres and fixes the radio frequency identification tag (i.e., the wireless identification tag 1000) onto the tire 2000, the adhesive tape (i.e., the fixing member 3000) and the radio frequency identification tag (i.e., the wireless identification tag 1000) are fixedly affixed to a surface or a wall of the tire 2000. Subject to practical conditions, the fixedly affixing process mentioned above could be performed during the vulcanization process of the tire 2000, or could be done after the completion of the making of the tire 2000 through additional processing.

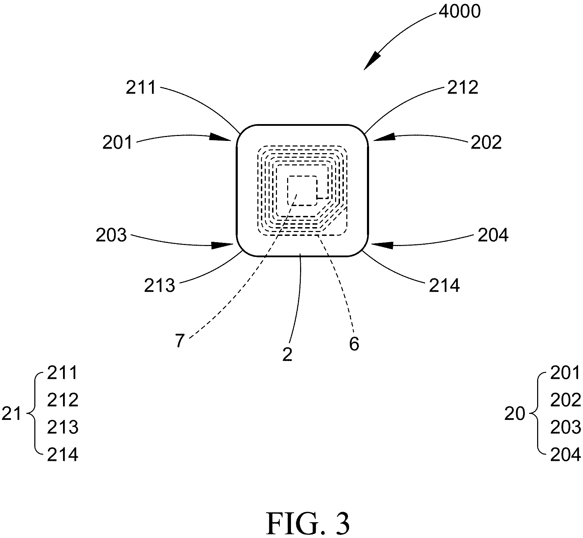

Please refer to FIGS. 1 to 3, wherein FIG. 3 is a schematic view of a chip packaging structure 4000 of the first embodiment of the present invention. The wireless identification tag 1000 includes a linear antenna 1 and the chip packaging structure 4000, wherein the linear antenna 1 wraps around the chip packaging structure 4000. The chip packaging structure 4000 includes a miniature antenna 6, an identification chip 7, and a packaging main body 2, wherein the identification chip 7 is electrically connected to miniature antenna 6. The packaging main body 2 has a plurality of corner portions 20 and at least one stress reducing structure 21, wherein the at least one stress reducing structure 21 is provided at at least one of the corner portions 20. The linear antenna 1 passes by the corner portions 20 and the at least one stress reducing structure 21 of the packaging main body 2. In the present invention, the stress reducing structure 21 is a curved chamfer. However, this is not a limitation of the present invention. In other embodiments, the stress reducing structure 21 could also be a slanted chamfer. With the stress reducing structure 21 (i.e., the curved or slanted chamfer), the present invention could ease the situation that stress concentrates at corner portions 20 of the packaging main body, whereby to reduce the chances of breaking the linear antenna 1 at the corner portions 20 of the packaging main body 2. As a result, the durability of the wireless identification tag 1000 could be enhanced.

Furthermore, the linear antenna 1 includes a winding portion 10, a first end portion 11, and a second end portion 12, wherein the first end portion 11 is connected to the winding portion 10, and the second end portion 12 is connected to the winding portion 10. The winding portion 10 wraps around a lateral side of the packaging main body 2. In the current embodiment, the corner portions 20 includes a first corner portion 201, a second corner portion 202, a third corner portion 203, and a fourth corner portion 204, wherein the first corner portion 201 is adjacent to the first end portion 11, the second corner portion 202 is adjacent to the second end portion 12, the third corner portion 203 is adjacent to the first corner portion 201 and the fourth corner portion 204, and the fourth corner portion 204 is adjacent to the third corner portion 203 and the second corner portion 202.

In the current embodiment, the packaging main body 2 has four stress reducing structures 21, including a first proximal stress reducing structure 211, a second proximal stress reducing structure 212, a first distal stress reducing structure 213, and a second distal stress reducing structure 214. The first proximal stress reducing structure 211 is provided at the first corner portion 201, the second proximal stress reducing structure 212 is provided at the second corner portion 202, the first distal stress reducing structure 213 is provided at the third corner portion 203, and the second distal stress reducing structure 214 is provided at the fourth corner portion 204. In other words, a contour of the packaging main body 2 is substantially a quadrilateral, of which the four corner portions 20 (i.e., the first corner portion 201, the second corner portion 202, the third corner portion 203, and the fourth corner portion 204) are respectively provided with the four stress reducing structures 21 (i.e., the first proximal stress reducing structure 211, the second proximal stress reducing structure 212, the first distal stress reducing structure 213, and the second distal stress reducing structure 214).

In this way, the four corner portions 20 of the packaging main body 2 of the current embodiment each has one of the stress reducing structures 21 provided. Therefore, the stress concentrated at the four corner portions 20 of the packaging main body 2 could be reduced through the curved or slanted chamfers of the stress reducing structure 21. This would reduce the chances of breaking the linear antenna 1 at the four corner portions 20 of the packaging main body 2, improving the durability of the wireless identification tag 1000.

The following is a method of making the chip packaging structure 4000, including:
Step S100: performing a stress-reducing structural cutting to a die B, whereby to create the stress reducing structure 21.
Step S101: performing a transverse cutting B0 and a vertical cutting B1 to the die B that has the stress reducing structure 21 formed thereon, whereby to create a chip packaging structure 4000.

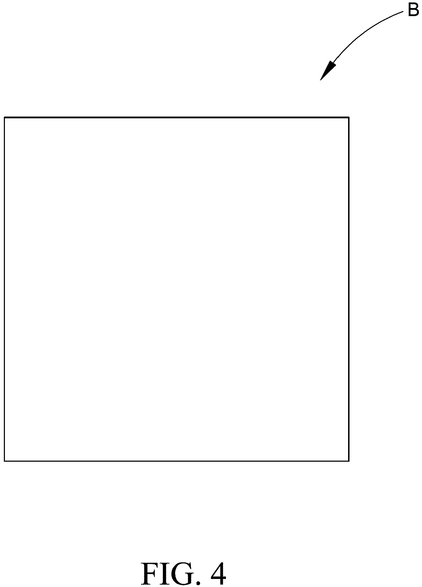

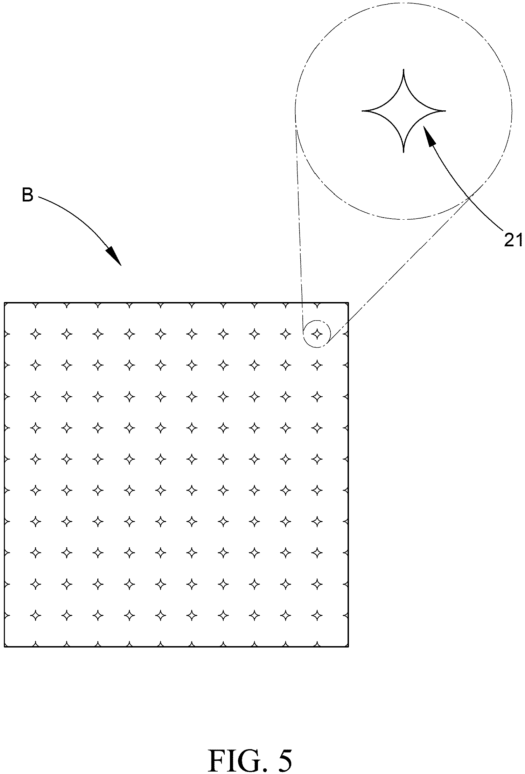

Please refer to FIG. 4 and FIG. 5, wherein FIG. 4 is a schematic view of the die B used in the first embodiment of the present invention, and FIG. 5 is a schematic view showing that the die B has gone through a laser cutting of a first phase. In practice, Step S1000 uses a laser to perform the stress-reducing structural cutting to the die B shown in FIG. 4, whereby to create the stress reducing structure 21 shown in FIG. 5 on the die B.

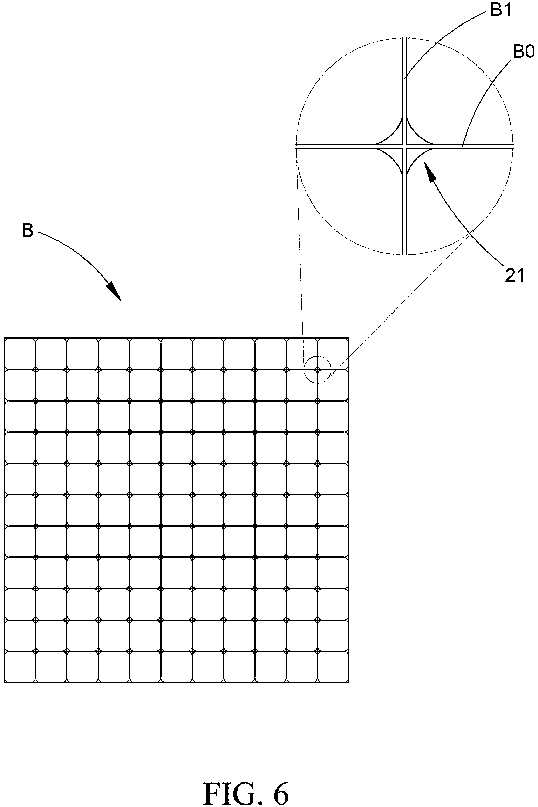

Please refer to FIG. 6, which is a schematic view showing that the die B used in the first embodiment of the present invention has gone through a laser cutting of a second phase. Step S101 uses a laser to perform the transverse cutting B0 and the vertical cutting B1 to the die B with the stress reducing structure 21 formed thereon. In other words, the laser is operated along the paths illustrated in FIG. 6 to perform the transverse cutting B0 and the vertical cutting B1 so that the chip packaging structure 4000 could be obtained.

After obtaining the chip packaging structure 4000, the linear antenna 1 would be wrapped around a periphery of the packaging main body 2 once so that the linear antenna 1 would pass by the stress reducing structure 21 of the packaging main body 2. However, how many times the linear antenna 1 wraps around the packaging main body 2 is not limited by the above description. In other embodiments, the linear antenna 1 could wrap around the periphery of the packaging main body 2 several times, which could be determined as practically required.

After wrapping the linear antenna 1 around the periphery of the packaging main body 2 once, the linear antenna 1 and the packaging main body 2 would be bound through adhesive dispensing. Please also refer to FIG. 3. In practice, a fixing glue A (e.g., an ultraviolet light curing adhesive) could be dispensed at the periphery of the packaging main body 2; after that, the ultraviolet light curing adhesive (i.e., the fixing glue A) would be exposed to ultraviolet light so that the ultraviolet light curing adhesive (i.e., the fixing glue A) could be cured to bind the linear antenna 1 and the packaging main body 2.

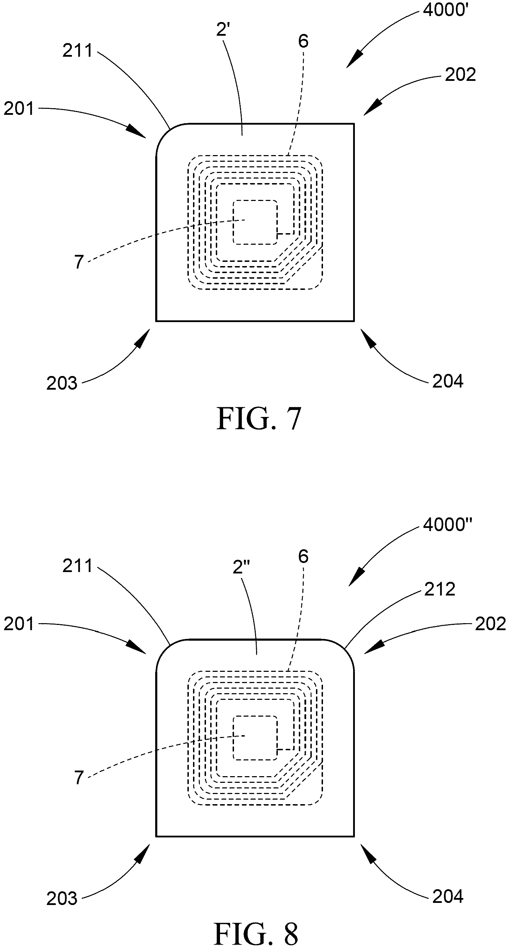

Please refer to FIG. 7, which is a schematic view of a chip packaging structure 4000' of a second embodiment of the present invention. The main difference between the chip packaging structure 4000' and that described in the previous embodiment is that a packaging main body 2' of the chip packaging structure 4000' is provided with only one stress reducing structure, which is, as an example in the current embodiment, the first proximal stress reducing structure 211. Furthermore, the first proximal stress reducing structure 211 is provided at the first corner portion 201 of the packaging main body 2' adjacent to the first end portion 11 of the linear antenna 1. In other embodiments that the packaging main body is provided with only one stress reducing structure, it could be the second proximal stress reducing structure 212 provided at the second corner portion 202 of the packaging main body adjacent to the second end portion 12 of the linear antenna 1. Or, it could be the first distal stress reducing structure 213 provided at a position on the packaging main body adjacent to the first corner portion 201 and the fourth corner portion 204. Understandably, it could also be the second distal stress reducing structure 214 provided at another position on the packaging main body adjacent to the second corner portion 202 and the third corner portion 203.

Please refer to FIG. 8, which is a chip packaging structure 4000" of a third embodiment of the present invention. The main difference between the chip packaging structure 4000" and those described in the previous embodiments is that a packaging main body 2" of the chip packaging structure 4000" is provided with only two stress reducing structures, which are, as an example in the current embodiment, the first proximal stress reducing structure 211 and the second proximal stress reducing structure 212. Furthermore, the first proximal stress reducing structure 211 and the second proximal stress reducing structure 212 are respectively provided at the first corner portion 201 of the packaging main body 2" adjacent to the first end portion 11 of the linear antenna 1 and the second corner portion 202 adjacent to the second end portion 12 of the linear antenna 1. However, in other embodiments that the packaging main body are provided with only two stress reducing structures, it could be the first proximal stress reducing structure 211 and the second distal stress reducing structure 214 provided on the packaging main body, wherein the first proximal stress reducing structure 211 and the second distal stress reducing structure 214 are respectively provided at the first corner portion 201 and the fourth corner portion 204 of the packaging main body. Or, it could be only the first distal stress reducing structure 213 and the first distal stress reducing structure 213 provided on the packaging main body, wherein the first distal stress reducing structure 213 and the first distal stress reducing structure 213 are respectively provided at the first corner portion 201 and the third corner portion 203 of the packaging main body. Or, it could be only the second proximal stress reducing structure 212 and the second distal stress reducing structure 214 provided on the packaging main body, wherein the second proximal stress reducing structure 212 and the second distal stress reducing structure 214 are respectively provided at the second corner portion 202 and the fourth corner portion 204 of the packaging main body. Or, it could be the second proximal stress reducing structure 212 and the first distal stress reducing structure 213 provided on the packaging main body, wherein the second proximal stress reducing structure 212 and the first distal stress reducing structure 213 are respectively provided at the second corner portion 202 and the third corner portion 203 of the packaging main body. Understandably, it could also be the second distal stress reducing structure 214 and the first distal stress reducing structure 213 provided on the packaging main body, wherein the second distal stress reducing structure 214 and the first distal stress reducing structure 213 are respectively provided at the fourth corner portion 204 and the third corner portion 203 of the packaging main body.

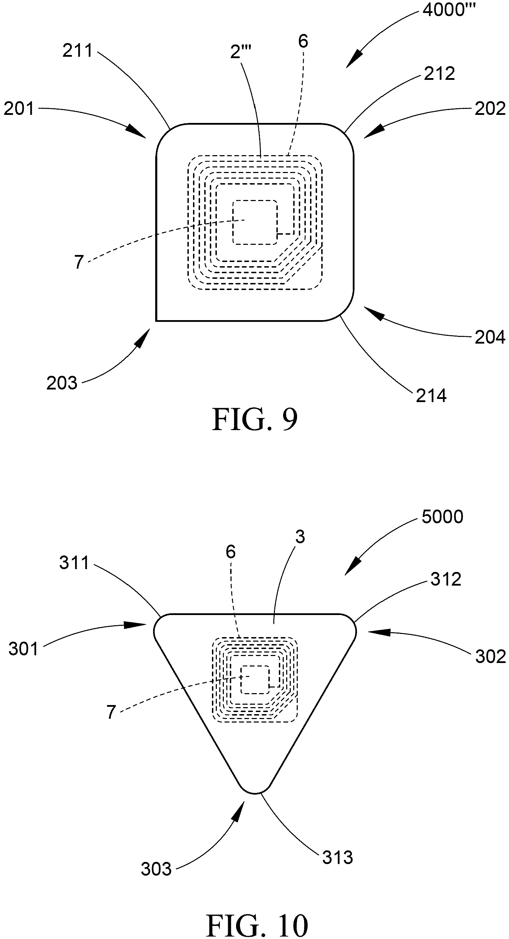

Please refer to FIG. 9, which is a schematic view of a chip packaging structure 4000‴ of a fourth embodiment of the present invention. The main difference between the chip packaging structure 4000‴ and those described in the previous embodiments is that a packaging main body 2'" of the chip packaging structure 4000‴ are provided with only three stress reducing structures, which are, as an example of the current embodiment, the first proximal stress reducing structure 211, the second proximal stress reducing structure 212, and the second distal stress reducing structure 214, wherein the first proximal stress reducing structure 211, the second proximal stress reducing structure 212, and the second distal stress reducing structure 214 are respectively provided at the first corner portion 201, the second corner portion 202, and the fourth corner portion 204 of the packaging main body 2‴. However, in other embodiments that the packaging main body are provided with only three stress reducing structures, it could be the second proximal stress reducing structure 212, the second distal stress reducing structure 214, and the first distal stress reducing structure 213 provided on the packaging main body, wherein the second proximal stress reducing structure 212, the second distal stress reducing structure 214, and the first distal stress reducing structure 213 are respectively provided at the second corner portion 202, the fourth corner portion 204, and the third corner portion 203 of the packaging main body. Or, it could be the second distal stress reducing structure 214, the first distal stress reducing structure 213, and the first proximal stress reducing structure 211 provided on the packaging main body, wherein the second distal stress reducing structure 214, the first distal stress reducing structure 213, and the first proximal stress reducing structure 211 are respectively provided at the fourth corner portion 204, the third corner portion 203, and the first corner portion 201 of the packaging main body. Understandably, it could also be the first distal stress reducing structure 213, the first proximal stress reducing structure 211, and the second proximal stress reducing structure 212 provided on the packaging main body, wherein the first distal stress reducing structure 213, the first proximal stress reducing structure 211, and the second proximal stress reducing structure 212 are respectively provided at the third corner portion 203, the first corner portion 201, and the second corner portion 202 of the packaging main body.

Please refer to FIG. 10, which is a schematic view of a chip packaging structure 5000 of a fifth embodiment of the present invention. The main difference between the chip packaging structure 5000 and those described in the previous embodiments is that a packaging main body 3 of the chip packaging structure 5000 includes a first corner portion 301, a second corner portion 302, and a third corner portion 303, wherein the first corner portion 301 is adjacent to the first end portion of the linear antenna, the second corner portion 302 is adjacent to the second end portion of the linear antenna, and the third corner portion 303 is adjacent to the first corner portion 301 and the second corner portion 302. In the current embodiment, the packaging main body 3 has three chamfered stress reducing structure, including a first proximal stress reducing structure 311, a second proximal stress reducing structure 312, and a first distal stress reducing structure 313, wherein the first proximal stress reducing structure 311 is provided at the first corner portion 301, the second proximal stress reducing structure 312 is provided at the second proximal stress reducing structure 312, and the first distal stress reducing structure 313 is provided at the third corner portion 303.

In this way, the first corner portion 301, the second corner portion 302, and the third corner portion 303 of the packaging main body 3 in the current embodiment are respectively provided with the first proximal stress reducing structure 311, the second proximal stress reducing structure 312, and the first distal stress reducing structure 313. Therefore, the stress concentrated at the three corner portions of the packaging main body 3 could be eased by the curved or slanted chamfers of the stress reducing structures, which could reduce the chances of breaking the linear antenna at the three corner portions of the packaging main body 3. As a result, the durability of the wireless identification tag could be improved.

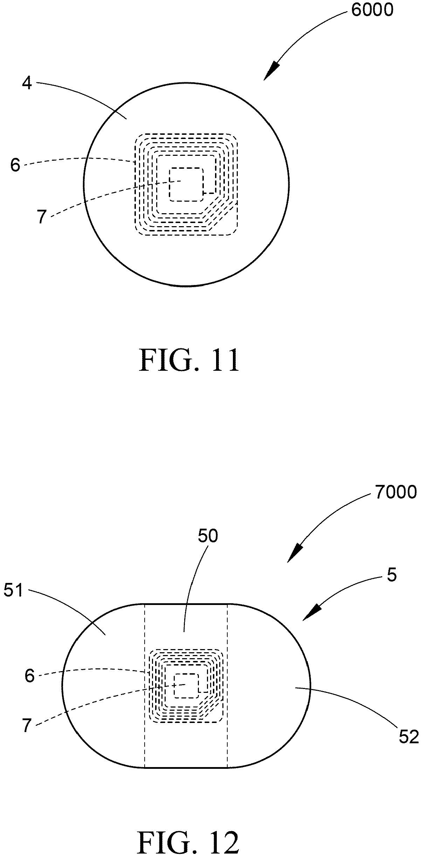

Please refer to FIG. 11, which is a schematic view of a chip packaging structure 6000 of a sixth embodiment of the present invention. The main difference between the chip packaging structure 6000 and those described in the previous embodiments is that a contour of a packaging main body 4 of the chip packaging structure 6000 is substantially a curve, and the linear antenna passes by the contour of the packaging main body 4. In this way, the contour of the packaging main body 4 of the current embodiment could ease the condition of concentrating the stress, which could reduce the chances of breaking the linear antenna at the packaging main body 4. As a result, the durability of the wireless identification tag could be improved.

Please refer to FIG. 12, which is a schematic view of a chip packaging structure 7000 of a seventh embodiment of the present invention. The main difference between the chip packaging structure 7000 and those described in the previous embodiments is that a packaging main body 5 of the chip packaging structure 7000 has a packaging main portion 50, a first end portion 51, and a second end portion 52, wherein the first end portion 51 extends at an end of the packaging main portion 50, and the second end portion 52 extends at another end of the packaging main portion 50 opposite to the first end portion 51. The first end portion 51 and the second end portion 52 are both curved structures. The linear antenna passes by an outer periphery of the packaging main portion 50, an outer periphery of the first end portion 51, and an outer periphery of the second end portion. In this way, the curved structures (i.e., the first end portion 51 and the second end portion 52) of the packaging main body 5 of the present invention could ease the condition of concentrating the stress, which could reduce the chances of breaking the linear antenna at the packaging main body 5. As a result, the durability of the wireless identification tag could be improved.

Compared to the prior art, by providing the stress reducing structure at the corner portions of the packaging main body, the present invention could significantly reduce the shear force between the linear antenna and the packaging main body when the internal stress of a tire is exerted thereto. As a result, the durability of the wireless identification tag could be improved.

## Claims

1. A chip packaging structure (4000, 4000', 4000", 4000‴, 5000, 6000, 7000), comprising:
a miniature antenna (6);
an identification chip (7) electrically connected to the miniature antenna (6); and
a packaging main body (2, 2', 2", 2‴, 3, 4, 5) adapted to encapsulate the miniature antenna (6) and the identification chip (7), wherein the packaging main body (2, 2′, 2", 2‴, 3, 4, 5) comprises a plurality of corner portions (20) and at least one stress reducing structure (21); the at least one stress reducing structure (21, 31) is provided at at least one of the corner portions (20).

2. The chip packaging structure (4000, 4000', 4000", 4000‴) of claim 1, wherein the corner portions (20) comprise a first corner portion (201), a second corner portion (202), a third corner portion (203), and a fourth corner portion (204); the first corner portion (201) is adjacent to the second corner portion (202) and the third corner portion (203); the third corner portion (203) is adjacent to the first corner portion (201) and the fourth corner portion (204); the fourth corner portion (204) is adjacent to the third corner portion (203) and the second corner portion (202); the at least one stress reducing structure (21) comprises a first proximal stress reducing structure (211), which is provided at the first corner portion (201).

3. The chip packaging structure (4000, 4000', 4000", 4000‴) of claim 2, wherein the at least one stress reducing structure (21) further comprises a second proximal stress reducing structure (212), which is provided at the second corner portion (202).

4. The chip packaging structure (4000, 4000', 4000", 4000‴) of claim 3, wherein the at least one stress reducing structure (21) further comprises a first distal stress reducing structure (213), which is provided at one of the third corner portion (203) and the fourth corner portion (204).

5. The chip packaging structure (4000, 4000', 4000", 4000‴) of claim 4, wherein the at least one stress reducing structure (21) further comprises a second distal stress reducing structure (214), which is provided at one of the third corner portion (203) and the fourth corner portion (204).

6. The chip packaging structure (4000, 4000', 4000", 4000") of claim 1, wherein the corner portions (20) comprise a first corner portion (201), a second corner portion (202), a third corner portion (203), and a fourth corner portion (204); the first corner portion (201) is adjacent to the second corner portion (202) and the third corner portion (203); the third corner portion (203) is adjacent to the first corner portion (201) and the fourth corner portion (204); the fourth corner portion (204) is adjacent to the third corner portion (203) and the second corner portion (202); the at least one stress reducing structure (21) comprises a first distal stress reducing structure (213), which is provided at one of the third corner portion (203) and the fourth corner portion (204).

7. The chip packaging structure (4000, 4000', 4000", 4000‴) of claim 6, wherein the at least one stress reducing structure (21) further comprises a second distal stress reducing structure (214), which is provided at one of the third corner portion (203) and the fourth corner portion (204).

8. The chip packaging structure (4000, 4000', 4000", 4000‴) of claim 7, wherein the at least one stress reducing structure (21) further comprises a first proximal stress reducing structure (211), which is provided at the first corner portion (201).

9. The chip packaging structure (4000, 4000', 4000", 4000‴) of claim 8, wherein the at least one stress reducing structure (21) further comprises a second proximal stress reducing structure (212), which is provided at the second corner portion (202).

10. The chip packaging structure (5000) of claim 1, wherein the corner portions (20) comprise a first corner portion (301), a second corner portion (302), and a third corner portion (303); the first corner portion (301), the second corner portion (302), and the third corner portion (303) are adjacent to each other; the at least one stress reducing structure comprises a first proximal stress reducing structure (311), which is provided at the first corner portion (301).

11. The chip packaging structure (5000) of claim 10, wherein the at least one stress reducing structure further comprises a second proximal stress reducing structure (312), which is provided at the second corner portion (302).

12. The chip packaging structure (5000) of claim 11, wherein the at least one stress reducing structure further comprises a first distal stress reducing structure (313), which is provided at the third corner portion (303).

13. The chip packaging structure (4000, 4000', 4000", 4000‴, 5000, 6000, 7000) of claim 1, wherein the at least one stress reducing structure (21) is a curved chamfer or a slanted chamfer.

14. A wireless identification tag (1000), comprising:
the chip packaging structure (4000, 4000', 4000", 4000‴ 5000, 6000, 7000) of claim 1; and
a linear antenna (1) comprising a winding portion (10), a first end portion (11), and a second end portion (12), wherein the first end portion (11) is connected to the winding portion (10), the second end portion (12) is connected to the winding portion (10), and the winding portion (10) wraps around the packaging main body (2, 2', 2", 2‴, 3, 4, 5).

15. The wireless identification tag (1000) of claim 14, wherein the winding portion (10) of the linear antenna (1) wraps around a periphery of the packaging main body (2, 2', 2", 2‴, 3, 4, 5) at least once.
